(19) Europäisches Patentamt / European Patent Office / Office européen des brevets

(11) **EP 3 048 687 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(51) Int Cl.:
*H02J 3/00* (2006.01)    *H02J 13/00* (2006.01)

(21) Anmeldenummer: **15201965.9**

(22) Anmeldetag: **22.12.2015**

(54) **VERFAHREN ZUR STEUERUNG EINES ELEKTRISCHEN ENERGIEVERTEILNETZES**

METHOD FOR CONTROLLING AN ELECTRICAL ENERGY DISTRIBUTION NETWORK

PROCEDE DE COMMANDE D'UN RESEAU DE DISTRIBUTION D'ENERGIE ELECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2015 DE 102015201085**

(43) Veröffentlichungstag der Anmeldung:
**27.07.2016 Patentblatt 2016/30**

(73) Patentinhaber: **Siemens Aktiengesellschaft 80333 München (DE)**

(72) Erfinder:
• **Bamberger, Joachim**
  **80999 München (DE)**
• **Metzger, Michael, Dr.**
  **85570 Markt Schwaben (DE)**
• **Reischböck, Markus**
  **91056 Erlangen (DE)**
• **Szabo, Andrei, Dr.**
  **85521 Ottobrunn (DE)**

(56) Entgegenhaltungen:
**WO-A1-2013/189552**

• **Dr H Cech ET AL: "Into the New Electricity Age with Optimal Integration of Decentralized Energy Resources -The FENIX Project - Content", , 12. September 2010 (2010-09-12), XP055277958, Gefunden im Internet: URL:http://www.indiaenergycongress.in/montreal/library/pdf/324.pdf [gefunden am 2016-06-06]**
• **Verband der Netzbetreiber VDN e.V. beim VDEW: "TransmissionCode 2007 Netz-und Systemregeln der deutschen Übertragungsnetzbetreiber", , 1 August 2007 (2007-08-01), pages 1-90, XP055467995, Retrieved from the Internet: URL:https://www.google.de/url?sa=t&rct=j&q=&esrc=s&source=web&cd=5&ved=0ahUKEwijpvaA wsHaAhWsyaYKHdaLA2oQFghXMAQ&url=https%3A%2 F%2Fwww.regelleistung.net%2Fext%2Fdownload %2Ftransmission2007&usg=AOvVaw3eE95SLO 4eo- cbvdJldc6H [retrieved on 2018-04-17]**

**Beschreibung**

Die Erfindung betrifft ein Verfahren zur Steuerung eines elektrischen Energieverteilnetzes sowie ein entsprechendes Energieverteilnetz und eine Steuereinheit.

Aus dem Stand der Technik sind Ansätze bekannt, mit denen die Bereitstellung von Leistung durch Energieverteilnetze mit dezentralen Energieerzeugern für ein daran gekoppeltes Energieübertragungsnetz geeignet gesteuert wird. In der Druckschrift [1] wird das Konzept eines sog. virtuellen Kraftwerks beschrieben, bei dem die Informationen von dezentralen Energieerzeugern eines Energieverteilnetz in einer zentralen Steuereinheit aggregiert werden, die mit einem Energieübertragungsnetz kommuniziert, so dass das Energieverteilnetz gegenüber dem Energieübertragungsnetz als ein einzelnes virtuelles Kraftwerk fungiert. Dieses Kraftwerk stellt dem Energieübertragungsnetz Wirkleistung bzw. Blindleistung bereit, beschreibt jedoch kein vollumfängliches Konzept, um wesentliche Systemdienstleistungen für das Energieübertragungsnetz zu realisieren.

In der Druckschrift [2] wird ein Energiezuteilungsverfahren beschrieben, bei dem eine adaptive Energiesteuerung von Energiequellen und Verbrauchern mittels einer Zuteilungskomponente und einer Netzüberwachungskomponente durchgeführt wird. Die Netzüberwachungskomponente überprüft eine Machbarkeit der von der Zuteilungskomponente ermittelten Energiezuteilung.

Aufgabe der Erfindung ist es, ein Verfahren zur Steuerung eines elektrischen Energieverteilnetzes zu schaffen, welches die Bereitstellung von wesentlichen Systemdienstleistungen für ein Energieübertragungsnetz ermöglicht.

Diese Aufgabe wird durch das Verfahren gemäß Patentanspruch 1 gelöst. Weiterbildungen der Erfindung sind in den abhängigen Ansprüchen definiert.

Das erfindungsgemäße Verfahren dient zur Steuerung eines elektrischen Energieverteilnetzes, in dem elektrische Leistung bzw. Energie über eine Vielzahl von über Stromleitungen verbundenen Netzknoten bereitgestellt wird. Der Begriff der elektrischen Leistung umfasst sowohl Wirkleistung als auch Blindleistung. Zumindest ein Teil der Netzknoten sind steuerbare Netzknoten mit jeweiligen lokalen Steuereinheiten. Ferner sind zumindest ein Teil dieser steuerbaren Netzknoten dezentrale elektrische Energieerzeuger, welche entsprechende Leistung generieren. Gegebenenfalls können in dem Energieverteilnetz auch einer oder mehrere der steuerbaren Netzknoten keine Energieerzeuger sein. Solche Netzknoten können beispielsweise steuerbare dezentrale elektrische Energieverbraucher oder Spannungsregler darstellen. Beispiele für Varianten von steuerbaren Netzknoten werden weiter unten gegeben.

Das Energieverteilnetz ist an einem Koppelpunkt (englisch: Point of Common Coupling) an ein Energieübertragungsnetz gekoppelt und stellt an diesem Koppelpunkt dem Energieübertragungsnetz elektrische Leistung bereit, die von den steuerbaren Netzknoten des Energieverteilnetzes stammt. Gegebenenfalls können mehrere solcher Koppelpunkte vorgesehen sein. Zur Bereitstellung der elektrischen Leistung kommuniziert eine zentrale Steuereinheit im Energieverteilnetz mit den lokalen Steuereinheiten der steuerbaren Netzknoten und dem Energieübertragungsnetz (bzw. einer entsprechenden Steuerkomponente dieses Energieübertragungsnetzes).

Das erfindungsgemäße Verfahren zeichnet sich dadurch aus, dass die zentrale Steuereinheit das Energieverteilnetz, das ein topologisches Kraftwerk mit den Netzknoten in einem klar definierten Netzgebiet und mit dem Koppelpunkt als eindeutigen Koppelpunkt zum überlagerten Energieübertragungsnetz darstellt, mit Hilfe der Kommunikation mit den lokalen Steuereinheiten und dem Energieübertragungsnetz derart steuert, dass an dem eindeutigen Koppelpunkt Primärregelleistung und Kurzschlussleistung für das Energieübertragungsnetz vorgehalten wird. Das erfindungsgemäße Verfahren ermöglicht somit erstmalig die Bereitstellung wesentlicher Systemdienstleistungen in der Form von Primärregelleistung und Kurzschlussleistung. Diese Leistungsarten sind an sich bekannt. Die Primärregelleistung dient zur Aufrechterhaltung der Netzfrequenz und die Kurzschlussleistung ermöglicht einen hohen Strom beim Auftreten eines Kurzschlusses im Energieübertragungsnetz. Üblicherweise wird die Primärregelleistung basierend auf einer Proportionalregelung in Abhängigkeit von Frequenzschwankungen bereitgestellt, wie weiter unten näher erläutert wird.

In einer weiteren Variante des erfindungsgemäßen Verfahrens steuert die zentrale Steuereinheit das Energieverteilnetz ferner derart, dass am Koppelpunkt Sekundärregelleistung und/oder Tertiärregelleistung für das Energieübertragungsnetz vorgehalten wird und/oder dass Oberwellen und/oder Subharmonische der Spannung am Koppelpunkt kompensiert werden. Mit dieser Variante werden somit noch weitergehende Systemdienstleistungen durch das Energieverteilnetz bereitgestellt.

In einer weiteren Ausgestaltung des erfindungsgemäßen Verfahrens steuert die zentrale Steuereinheit das Energieverteilnetz ferner derart, dass am Koppelpunkt als weitere Systemdienstleistung Blindleistung für das Energieübertragungsnetz vorgehalten wird, wobei diese Blindleistung bei Bedarf Spannungsschwankungen am Koppelpunkt kompensieren kann. Diese Art der Blindleistungsbereitstellung entspricht vom Regelungs- und Wirkprinzip der sog. Primärregelleistung, die als Wirkleistung die Frequenz beeinflusst. Wegen der Analogie wird im Folgenden der Begriff der "Regelblindleistung" benutzt. Die Regelblindleistung kann ähnlich wie die Primärregelleistung basierend auf einer Proportionalregelung bereitgestellt werden, wobei diese Proportionalregelung nunmehr von Spannungsschwankungen am Koppelpunkt abhängt.

In einer weiteren Ausgestaltung des erfindungsgemäßen Verfahrens steuert die zentrale Steuereinheit das Energieverteilnetz ferner derart, dass es bei Ausfall des Energieübertragungsnetzes als Inselnetz betrieben wird. Insbesondere übernimmt die zentrale Steuereinheit auch eine Resynchronisation des Energieverteilnetzes mit dem Energieübertragungsnetz, wenn dieses den Betrieb wieder aufnimmt. Gemäß der soeben beschriebenen Variante wird die weitergehende Systemdienstleistung der Schwarzstartfähigkeit bereitgestellt.

In einem weiteren Ausführungsbeispiel werden im Rahmen der Kommunikation der zentralen Steuereinheit mit dem Energieübertragungsnetz Sollwerte für die vorzuhaltende Primärregelleistung und Kurzschlussleistung und ggf. auch für die oben beschriebene vorzuhaltende Sekundärregelleistung bzw. Tertiärregelleistung bzw. Regelblindleistung von dem Energieübertragungsnetz an die zentrale Steuereinheit übermittelt. Alternativ oder zusätzlich werden im Rahmen der Kommunikation der zentralen Steuereinheit mit den lokalen Steuereinheiten die von den steuerbaren Netzknoten jeweils angebotene Primärregelleistung und Kurzschlussleistung und ggf. auch die jeweils angebotene Sekundärregelleistung bzw. Tertiärregelleistung bzw. Regelblindleistung durch die lokalen Steuereinheiten der zentralen Steuereinheit mitgeteilt. Mit diesen ausgetauschten Informationen kann bedarfsgerecht die entsprechende Systemdienstleistung dem Energieübertragungsnetz bereitgestellt werden.

In einer besonders bevorzugten Ausführungsform wird in der zentralen Steuereinheit die aktuelle Netzbelastung des Energieverteilnetzes geschätzt und/oder die zukünftige Netzbelastung vorhergesagt, wobei die zentrale Steuereinheit bei der Steuerung des Energieverteilnetzes die aktuelle und/oder zukünftige Netzbelastung derart berücksichtigt, dass eine bestimmte Belastungsgrenze des Energieverteilnetzes nicht überschritten wird.

In einer speziellen Variante der soeben beschriebenen Ausführungsform werden zur Schätzung der aktuellen Netzbelastung und/oder zur Vorhersage der zukünftigen Netzbelastung Istwerte und/oder Vorhersagen von Parametern der steuerbaren Netzknoten von den jeweiligen lokalen Steuereinheiten an die zentrale Steuereinheit übermittelt. Basierend auf der (geschätzten) aktuellen bzw. (vorgesagten) zukünftigen Netzbelastung werden Sollwerte der Parameter der steuerbaren Netzknoten von der zentralen Steuereinheit an die jeweiligen Steuereinheiten übermittelt. Die Parameter, deren Ist- bzw. Sollwerte übermittelt werden, können je nach Ausgestaltung des Verfahrens unterschiedlich sein. Insbesondere betreffen sie Spannungen bzw. Ströme bzw. Wirk- und Blindleistungen in den jeweiligen steuerbaren Netzknoten.

In einer weiteren Variante des erfindungsgemäßen Verfahrens werden zur Schätzung der aktuellen Netzbelastung und/oder zur Vorhersage der zukünftigen Netzbelastung ferner Istwerte von Spannungs- und/oder Stromsensoren, die im Energieverteilnetz außerhalb der steuerbaren Netzknoten angeordnet sind, und/oder Wettervorhersagen an die zentrale Steuereinheit übermittelt. Aus den Wettervorhersagen kann die zentrale Steuereinheit Vorhersagen für Parameter des Verteilnetzes ermitteln, z.B. den Verbrauch oder die Erzeugung von erneuerbarer Energie. Insbesondere die Wettervorhersagen können ggf. auch an die lokalen Steuereinheiten übermittelt werden, die daraus eine Vorhersage des eigenen Verbrauchs oder der eigenen Erzeugung ermitteln.

In einer weiteren Ausgestaltung der Erfindung ist der Koppelpunkt an einem Umspannwerk vorgesehen, wobei die zentrale Steuereinheit im Umspannwerk angeordnet sein kann, aber nicht muss. Insbesondere umfasst das Energieverteilnetz ein Niederspannungs- oder Mittelspannungsnetz, dessen Spannung über das Umspannwerk in eine höhere Spannung des Energieübertragungsnetzes transformiert wird.

In einer weiteren Variante umfassen die steuerbaren Netzknoten des Energieverteilnetzes, welche Energieerzeuger sind, eine oder mehrere regenerative Energieerzeuger, insbesondere eine oder mehrere Windkraftanlagen und/oder eine oder mehrere Photovoltaikanlagen und/oder ein oder mehrere Wasserkraftwerke und/oder ein oder mehrere Biomassekraftwerke mit jeweiligen lokalen Steuereinheiten. Ebenso können die steuerbaren Netzknoten eine oder mehrere fossile Kraftwerke und/oder eine oder mehrere Kraft-Wärme-Kopplungs-Anlagen bzw. Kraft-Wärme-Kälte-Kopplungs-Anlagen mit jeweiligen lokalen Steuereinheiten umfassen. Alle lokalen Steuereinheiten der genannten steuerbaren Netzknoten kommunizieren im Rahmen der Steuerung des Energieverteilnetzes mit der zentralen Steuereinheit und sind somit in das erfindungsgemäße Steuerverfahren einbezogen.

In einer weiteren bevorzugten Ausführungsform umfassen die steuerbaren Netzknoten des Energieverteilnetzes neben Energieerzeugern einen oder mehrere steuerbare elektrische Energieverbraucher und/oder einen oder mehrere elektrische Energiespeicher und/oder ein oder mehrere Microgrids mit jeweiligen lokalen Steuereinheiten. Diese lokalen Steuereinheiten kommunizieren im Rahmen der Steuerung des Energieverteilnetzes mit der zentralen Steuereinheit und sind somit in das erfindungsgemäße Steuerverfahren einbezogen.

In einer weiteren Ausgestaltung des erfindungsgemäßen Verfahrens umfassen die steuerbaren Netzknoten des Energieverteilnetzes ferner einen oder mehrere Spannungsregler mit jeweiligen lokalen Steuereinheiten, welche im Rahmen der Steuerung des Energieverteilnetzes mit der zentralen Steuereinheit kommunizieren und somit ebenfalls in das erfindungsgemäße Steuerverfahren einbezogen sind. Der oder die Spannungsregler umfassen vorzugsweise einen oder mehrere Transformatoren und/oder eine oder mehrere Kapazitätsbänke und/oder einen oder mehrere Längsregler.

Neben dem oben beschriebenen Verfahren betrifft die Erfindung ferner ein elektrisches Energieverteilnetz, welches zur Bereitstellung von elektrischer Leistung eine Vielzahl von über Stromleitungen verbundene Netzknoten umfasst, wobei zumindest ein Teil der Netzknoten steuerbare Netzknoten mit jeweiligen lokalen Steuereinheiten sind und zumindest ein Teil dieser steuerbaren Netzknoten dezentrale elektrische Energieerzeuger oder dezentrale elektrische Energiespeicher sind. Das Energieverteilnetz ist an einem Koppelpunkt an ein Energieübertragungsnetz gekoppelt und kann an diesem Koppelpunkt dem Energieübertragungsnetz elektrische Leistung bereitstellen, die von den steuerbaren Netzknoten des Energieverteilnetzes stammt. Zur Bereitstellung der elektrischen Leistung kann eine zentrale Steuereinheit in dem Energieverteilnetz mit den lokalen Steuereinheiten der steuerbaren Netzknoten und dem Energieübertragungsnetz kommunizieren.

Das erfindungsgemäße elektrische Energieverteilnetz zeichnet sich dadurch aus, dass die zentrale Steuereinheit derart ausgestaltet ist, dass sie das Energieverteilnetz, das ein topologisches Kraftwerk mit den Netzknoten in einem klar definierten Netzgebiet und mit dem Koppelpunkt als eindeutigen Koppelpunkt zum überlagerten Energieübertragungsnetz darstellt, mit Hilfe der Kommunikation mit den lokalen Steuereinheiten und dem Energieübertragungsnetz derart steuert, dass an dem eindeutigen Koppelpunkt Primärregelleistung und Kurzschlussleistung für das Energieübertragungsnetz vorgehalten wird.

Vorzugsweise ist das erfindungsgemäße Energieverteilnetz zur Ausführung einer oder mehrerer bevorzugter Varianten des erfindungsgemäßen Verfahrens eingerichtet.

Die Erfindung betrifft darüber hinaus eine Steuereinheit für das soeben beschriebene elektrische Energieverteilnetz. Die Steuereinheit stellt die oben erläuterte zentrale Steuereinheit des Energieverteilnetzes dar, welche derart ausgestaltet ist, dass sie mit den lokalen Steuereinheiten der steuerbaren Netzknoten, die dezentrale elektrische Energieerzeuger oder dezentrale elektrische Energiespeicher sind, und dem Energieübertragungsnetz kommuniziert und mit Hilfe dieser Kommunikation das Energieverteilnetz, das ein topologisches Kraftwerk mit den Netzknoten in einem klar definierten Netzgebiet und mit dem Koppelpunkt als eindeutigen Koppelpunkt zum überlagerten Energieübertragungsnetz darstellt, derart steuert, dass an dem eindeutigen Koppelpunkt Primärregelleistung und Kurzschlussleistung für das Energieübertragungsnetz vorgehalten wird. Jeweilige Merkmale der oben beschriebenen bevorzugten Varianten des erfindungsgemäßen Verfahrens, die mit der Steuereinheit im Zusammenhang stehen, können in der Form entsprechender Vorrichtungsmerkmale in der Steuereinheit implementiert sein.

Ausführungsbeispiele der Erfindung werden nachfolgend anhand der beigefügten Figuren detailliert beschrieben.

Es zeigen:

Fig. 1   eine schematische Darstellung eines Energieverteilnetzes, in dem eine Variante des erfindungsgemäßen Steuerverfahrens durchgeführt wird; und

Fig. 2   ein Diagramm, welches den Ablauf einer Variante des erfindungsgemäßen Verfahrens in dem Energieverteilnetz der Fig. 1 wiedergibt.

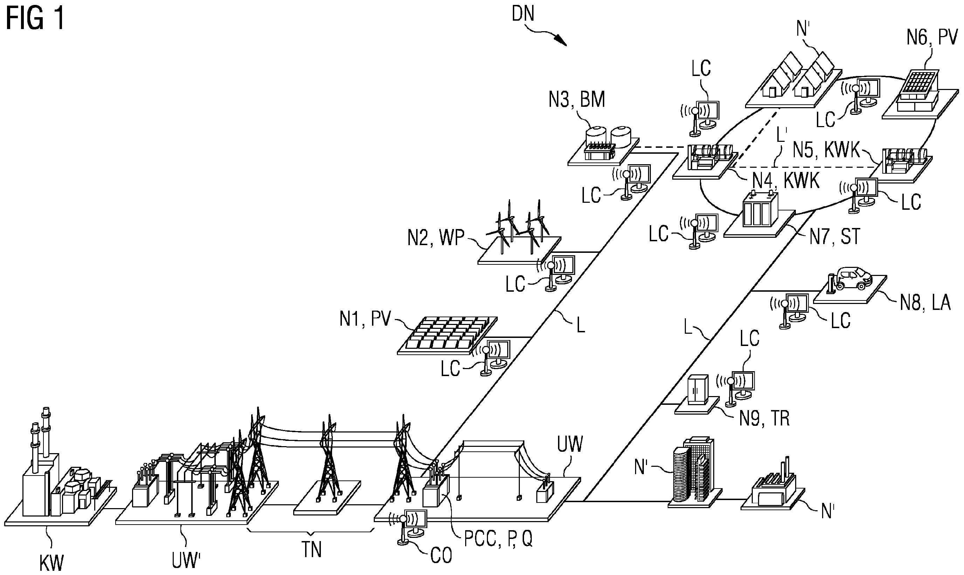

Fig. 1 zeigt in schematischer Darstellung den Aufbau eines Energieverteilnetzes DN, in dem eine Variante des erfindungsgemäßen Steuerverfahrens durchgeführt wird. Das Energieverteilnetz DN ist im rechten Teil der Fig. 1 wiedergegeben und umfasst ein Umspannwerk UW sowie eine Vielzahl von steuerbaren Netzknoten N1, N2, ..., N9 und einige nicht steuerbare Netzknoten N'. Diese Netzknoten sind über Stromleitungen L miteinander verbunden. Die Stromleitungen sind in Fig. 1 als durchgezogene Linien angedeutet und nur teilweise mit dem Bezugszeichen L spezifiziert. Ferner findet zwischen einigen Einheiten in dem Energieverteilnetz ein Austausch von Wärme statt, was durch gestrichelte Linien zwischen den entsprechenden Einheiten wiedergegeben ist. Der Wärmeaustausch spielt im erfindungsgemäßen Verfahren keine direkte Rolle und wird deshalb nicht weiter erläutert.

Das Umspannwerk UW des Energieverteilnetzes DN ist über einen Koppelpunkt PCC (PCC = Point of Common Coupling) mit einem lediglich schematisch angedeuteten Energieübertragungsnetz TN gekoppelt. Über diesen Koppelpunkt wird Wirkleistung P und Blindleistung Q in das Übertragungsnetz eingespeist. Das Energieverteilnetz DN ist insbesondere ein Mittel- bzw. Niederspannungsnetz, dessen Spannung durch das Umspannwerk UW in eine höhere Spannung für das Übertragungsnetz TN gewandelt wird. In Fig. 1 ist ferner ein weiteres herkömmliches Umspannwerk UW' gezeigt, über das ein konventionelles Kraftwerk KW Leistung in das Übertragungsnetz TN einspeist.

Zur Realisierung des erfindungsgemäßen Steuerverfahrens ist im Umspannwerk UW eine zentrale Steuereinheit CO vorgesehen. Diese Steuereinheit hat die gleichen Schnittstellen zu einem Energie-Management-System des Energieübertragungsnetzes TN wie herkömmliche Großkraftwerke. Ferner kommuniziert die zentrale Steuereinheit mit einer Vielzahl von lokalen Steuereinheiten LC, wobei diese lokalen Steuereinheiten in den steuerbaren Netzknoten N1 bis N9 und nicht in den weiteren nicht steuerbaren Netzknoten N' vorgesehen sind. Die Kommunikation zwischen der zentralen Steuereinheit CO und den lokalen Steuereinheiten LC kann drahtgebunden oder ggf. auch drahtlos per Funk erfolgen. Dabei kann ggf. auch eine bereits vorhandene Netzinfrastruktur, wie z.B. das Internet, genutzt werden.

Bei den einzelnen steuerbaren Netzknoten N1 bis N9 handelt es sich um dezentrale elektrische Energieerzeuger bzw. elektrische Energiespeicher bzw. Transformatoren bzw. steuerbare Lasten. Im Einzelnen stellt der Netzknoten N1 eine industrielle Photovoltaikanlage PV dar, der Netzknoten N2 ist ein industrieller Energiewindpark WP und der Netzknoten N3 repräsentiert ein Biomassekraftwerk BM. Bei den Netzknoten N1 bis N3 handelt es sich somit um regenerative Energieerzeugungsanlagen. Demgegenüber sind die Netzknoten N4 und N5 fossile Kraftwerke KWK, die auf Kraft-Wärme-Kopplung basieren. Der Netzknoten N6 ist wiederum eine regenerative Energieerzeugungsanlage in der Form einer Photovoltaikanlage PV, wobei diese Anlage nunmehr in einem privaten Haushalt installiert ist. Anstatt einer Photovoltaikanlage kann als regenerative Energieerzeugungsanlage z.B. auch eine Windkraftanlage verwendet werden.

Der weitere steuerbare Netzknoten N7 stellt einen elektrischen Energiespeicher ST dar, z.B. in der Form von Speicherbatterien. Ferner enthält das Energieverteilnetz den Netzknoten N8, der eine steuerbare Last LA darstellt, die in Fig. 1 eine elektrische Fahrzeuglade-Infrastruktur ist. Der Netzknoten N9 ist ein steuerbarer Transformator, um Spannung in dem Energieverteilnetz zu wandeln. Im Gegensatz zu den Netzknoten N1 bis N9 enthalten die Netzknoten N' keine lokalen Steuereinheiten LC. Es kann sich hierbei um Energieverbraucher in der Form von Gebäuden bzw. von Haushalten handeln.

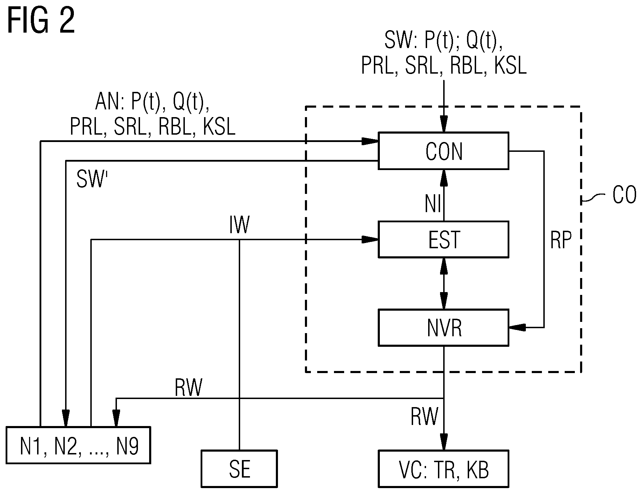

Die zentrale Steuereinheit CO tauscht Informationen mit den lokalen Steuereinheiten LC und mit dem Übertragungsnetz TN aus, um basierend darauf Leistung in der Form von Wirkleistung P und Blindleistung Q über den Koppelpunkt PCC dem Übertragungsnetz bereitzustellen. Dabei wird auch die Bereitstellung von sog. Systemdienstleistungen in der Form von Regelleistung und Kurzschlussleistung ermöglicht, wie anhand von Fig. 2 erläutert wird. Das Energieverteilnetz DN stellt in diesem Sinne ein topologisches Kraftwerk mit Netzknoten in einem klar definierten Netzgebiet und mit einem eindeutigen Koppelpunkt zum überlagerten Energieübertragungsnetz dar.

Die in Fig. 2 gezeigte Steuerung beruht auf dem Prinzip der adaptiven Energiesteuerung des Dokuments WO 2013/189552 A1. Zusätzlich ermöglicht die Steuerung auch die Bereitstellung der oben genannten Systemdienstleistungen. Gemäß Fig. 2 empfängt eine Steuerkomponente CON in der durch das gestrichelte Rechteck angedeuteten zentralen Steuereinheit CO Sollwerte SW von dem Energieübertragungsnetz TN. Die Sollwerte SW umfassen u.a. den zeitlichen Verlauf P(t) bzw. Q(t) der von dem Energieverteilnetz DN bereitzustellenden Wirkleistung bzw. Blindleistung. Mit anderen Worten werden der Steuerkomponente CON Fahrpläne für die Wirkleistungs- und Blindleistungserzeugung des Energieverteilnetzes DN übermittelt.

Neben diesen Fahrplänen werden zusätzlich Sollwerte für die Primärregelleistung PRL, die Sekundärregelleistung SRL, die Regelblindleistung RBL und die Kurzschlussleistung KSL vorgegeben. Die Größen der Primärregelleistung, Sekundärregelleistung und Kurzschlussleistung sind dem Fachmann an sich bekannt und werden deshalb nicht weiter im Detail erläutert. Die Primärregelleistung wird meist über einen Proportionalregler gesteuert, der Wirkleistung basierend auf Schwankungen der Nennfrequenz des Netzes unter Berücksichtigung eines Proportionalitätsfaktors bereitstellt. Im Speziellen kann die Primärregelleistung mit einem Proportionalregler wie folgt eingestellt werden:

$$PRL = P_0 + k_f \cdot \Delta f \qquad (1)$$

Dabei zeichnet $P_0$ einen vorgegebenen Wirkleistungswert, $\Delta f$ ist die Abweichung von der Nennfrequenz und $k_f$ ist der erwähnte Proportionalitätsfaktor.

Die Primärregelleistung wird innerhalb einiger Sekunden bereitgestellt. Im Gegensatz hierzu ist ein längerer Zeitraum für die Bereitstellung der Sekundärregelleistung festgelegt. Die Kurzschlussleistung ermöglicht, dass das Energieverteilnetz ausreichend Strom im Falle eines Kurzschlusses im Energieübertragungsnetz bereitstellt, so dass die Detektion des Kurzschlusses über einen entsprechend hohen Kurzschlussstrom im Übertragungsnetz möglich ist.

Die erwähnte Regelblindleistung kann analog zur Primärregelleistung über einen Proportionalregler gesteuert werden, wobei die Proportionalregelung nunmehr jedoch von der Spannung am Koppelpunkt PCC abhängt. Im Speziellen lautet die Proportionalregelung in einem solchen Regler wie folgt:

$$RBL = Q_0 + k_U \cdot \Delta U \qquad (2)$$

$Q_0$ ist ein vorgegebener Blindleistungswert und $\Delta U$ bezeichnet die Abweichung der Spannung im Koppelpunkt von einem Nennspannungswert. $k_U$ ist wiederum ein Proportionalitätsfaktor dieser Regelung.

Die Komponente CON führt die eigentliche Steuerung des Energieverteilnetzes aus und empfängt hierzu die oben erwähnten Sollwerte SW von dem Energieübertragungsnetz TN. Ferner erhält die Komponente CON von den lokalen Steuereinheiten LC der jeweiligen Netzknoten N1 bis N9 Angebote AN für in den einzelnen Netzknoten verfügbare Wirkleistung P(t), Blindleistung Q(t) sowie Primärregelleistung PRL, Sekundärregelleistung SRL, Regelblindleistung BRL und Kurzschlussleistung KSL. Diese Angebote können von der Steuerung CON gegen eine monetäre Zahlung erworben werden. Die Steuerkomponente CON verarbeitet die Sollwerte SW sowie die Angebote AN, wobei sie auch noch die Ergebnisse eines Netzbelastungsschätzers EST berücksichtigt, der Teil der zentralen Steuereinheit CO ist.

Der Netzbelastungsschätzer EST schätzt mittels bekannter Methoden die Belastung des Energieverteilnetzes unter Verwendung von Istwerten IW entsprechender Parameter der Netzknoten N1 bis N9 bzw. von Istwerten IW (d.h. Messwerten) entsprechender Spannungs- und/oder Stromsensoren SE außerhalb der Netzknoten. Die Parameter der Netzknoten können beliebige stromtechnische Größen der einzelnen Netzknoten betreffen und beziehen sich insbesondere auf die auftretenden Wirkleistungen, Blindleistungen, Spannungen und Ströme in den einzelnen Netzknoten. Diese Istwerte IW werden von dem Netzbelastungsschätzer EST verarbeitet, um hierdurch einen Netzlastindikation NI zu ermitteln, der an die Steuerkomponente CON gegeben wird. Gegebenenfalls besteht auch die Möglichkeit, dass der Netzbelastungsschätzer EST mit an sich bekannten Verfahren über geeignete Modelle die Netzbelastung für die Zukunft vorhersagt und den entsprechenden Vorhersagewert neben dem Netzlastindikator NI an die Steuerkomponente CON übergibt.

Die Steuerkomponente CON berücksichtigt den Netzlastindikator bei der Steuerung derart, dass eine vorbestimmte Netzbelastungsgrenze eingehalten wird, bei deren Überschreiten das Energieverteilnetz beschädigt werden kann bzw. es zu einem Ausfall des Netzes kommen kann. Das Prinzip der über die Komponente CON durchgeführten Steuerung unter Berücksichtigung der Ergebnisse des Netzbelastungsschätzers EST kann der oben genannten Druckschrift [2] entnommen werden. Unter Rückgriff auf das Verfahren dieser Druckschrift wird nunmehr auch die Bereitstellung von Primärregelleistung, Sekundärregelleistung, Regelblindleistung und Kurzschlussleistung berücksichtigt wird. Eine Implementierung dieser zusätzlichen Leistungswerte ist angesichts der Offenbarung der Druckschrift [2] für den Fachmann problemlos umsetzbar.

Als Ergebnis der über die Komponente CON durchgeführten Steuerung werden die Leistungswerte entsprechend der Sollwerte SW für das Übertragungsnetz TN bereitgestellt. Um dies zu erreichen, werden Sollwerte SW' der oben genannten Parameter, deren Istwerte an den Netzbelastungsschätzer EST übertragen wurden, an die einzelnen lokalen Steuereinheiten LC gegeben. Durch die Einstellung der Parameter auf die entsprechenden Sollwerte SW' wird gleichzeitig sichergestellt, dass es nicht zu einer Netzüberlastung kommt.

Über die Steuerkomponente CON in Kombination mit dem Netzbelastungsschätzer EST können drohende Engpässe innerhalb des Energieverteilnetzes erkannt bzw. vorhergesagt werden und entsprechend kompensiert und vermieden werden. Die Sollwerte SW vom Übertragungsnetz TN werden geeignet in Sollwerte SW' für die lokalen Netzknoten aufgeteilt, die an die jeweiligen lokalen Steuereinheiten übermittelt werden. Hierdurch ist es möglich, die eingebundenen Energieerzeuger, Energiespeicher, steuerbaren Lasten und ggf. Microgrids im Spannungsbereich des Energieverteilnetzes so zu koordinieren, dass sich das Energieverteilnetz als Ganzes im überlagerten Energieübertragungsnetz an der Bereitstellung von Primärregelleistung, Sekundärregelleistung, Regelblindleistung und Kurzschlussleistung beteiligt und über die gleichzeitige Vermeidung von Engpässen innerhalb des Energieverteilnetzes die o.g. Systemdienstleistungen zuverlässig erbracht werden können. Daneben werden auch die klassischen Anwendungsfälle, wie Vermarktung von Stromprodukten auf dem Strommarkt, über die Verarbeitung entsprechender Fahrpläne abgedeckt.

In der Steuerung der Fig. 2 ist optional der Netzspannungsregler NVR vorgesehen, der mit dem Netzbelastungsschätzer EST Informationen austauscht, um die Spannung im Energieverteilnetz geeignet festzulegen. Der Netzspannungsregler NVR erhält von der Steuerkomponente CON Regelparameter RP, wie z.B. Blindleistungssollwerte, und er errechnet daraus Regelwerte bzw. Sollwerte RW für die Spannungsregelung, die dann an die lokalen Steuerungen LC der Netzknoten N1 bis N9 bzw. an die nochmals separat gezeigten Spannungsregler VC gegeben werden, wobei die Spannungsregler u.a. Transformatoren TR bzw. ggf. auch Kapazitätsbänke KB darstellen können.

Die im Vorangegangenen beschriebene Ausführungsform der Erfindung weist eine Reihe von Vorteilen auf. Insbesondere wird die Steuerung eines Energieverteilnetzes derart geschaffen, dass das Energieverteilnetz hin zum Übertragungsnetz ein topologisches Kraftwerk darstellt, welches zum ersten Mal die volle Systemintegration dezentraler Anlagen inklusive ihrer Mitwirkung an allen relevanten Systemdienstleistungen (insbesondere Bereitstellung von Primärregelleistung, Sekundärregelleistung und Kurzschlussleistung) ermöglicht.

Literaturverzeichnis:

[1] E. Fuchs et al., "Into the New Electricity Age with Optimal Integration of Decentralized Energy Resources - The Fenix Project", WEC Montreal, September 12-16, 2010

[2] WO 2013/189552 A1

**Patentansprüche**

1. Verfahren zur Steuerung eines elektrischen Energieverteilnetzes (DN), in dem elektrische Leistung über eine Vielzahl von über Stromleitungen (L) verbundenen Netzknoten (N1, ..., N9, N') bereitgestellt wird, wobei zumindest ein Teil der Netzknoten (N1, ..., N9, N') steuerbare Netzknoten (N1, ..., N9) mit jeweiligen lokalen Steuereinheiten (LC) sind und zumindest ein Teil dieser steuerbaren Netzknoten (N1, ..., N9) dezentrale elektrische Energieerzeuger oder dezentrale elektrische Energiespeicher sind, wobei das Energieverteilnetz (DN) an einem Koppelpunkt (PCC) an ein Energieübertragungsnetz (TN) gekoppelt ist und an diesem Koppelpunkt (PCC) dem Energieübertragungsnetz (TN) elektrische Leistung (P, Q) bereitstellt, die von den steuerbaren Netzknoten (N1, ..., N9) des Energieverteilnetzes (DN) stammt, wobei zur Bereitstellung der elektrischen Leistung (P, Q) eine zentrale Steuereinheit (CO) im Energieverteilnetz (DN) mit den lokalen Steuereinheiten (LC) der steuerbaren Netzknoten (N1, ..., N9) und dem Energieübertragungsnetz (TN) kommuniziert, **dadurch gekennzeichnet, dass** die zentrale Steuereinheit (CO) das Energieverteilnetz (DN), das ein topologisches Kraftwerk mit den Netzknoten (N1, ..., N9) in einem klar definierten Netzgebiet und mit dem Koppelpunkt (PCC) als eindeutigen Koppelpunkt zum überlagerten Energieübertragungsnetz (TN) darstellt, mit Hilfe der Kommunikation mit den lokalen Steuereinheiten (LC) und dem Energieübertragungsnetz (TN) derart steuert, dass an dem eindeutigen Koppelpunkt (PCC) Primärregelleistung (PRL) und Kurzschlussleistung (KSL) für das Energieübertragungsnetz (TN) vorgehalten wird.

2. Verfahren nach Anspruch 1, **dadurch gekennzeichnet, dass** die zentrale Steuereinheit (CO) das Energieverteilnetz (DN) ferner derart steuert, dass am Koppelpunkt (PCC) Sekundärregelleistung (SRL) und/oder Tertiärregelleistung für das Energieübertragungsnetz (TN) vorgehalten wird und/oder dass Oberwellen und/oder Subharmonische der Spannung am Koppelpunkt (PCC) kompensiert werden.

3. Verfahren nach Anspruch 1 oder 2, **dadurch gekennzeichnet, dass** die zentrale Steuereinheit (CO) das Energieverteilnetz (DN) ferner derart steuert, dass am Koppelpunkt (PCC) Regelblindleistung (RBL) für das Energieübertragungsnetz (TN) vorgehalten wird, wobei die Regelblindleistung (RBL) zur Kompensation von Spannungsschwankungen am Koppelpunkt (PCC) vorgesehen ist.

4. Verfahren nach einem der vorhergehenden Ansprüche, **dadurch gekennzeichnet, dass** die zentrale Steuereinheit (CO) das Energieverteilnetz (DN) ferner derart steuert, dass das Energieverteilnetz (DN) bei Ausfall des Energieübertragungsnetzes (TN) als Inselnetz betrieben wird.

5. Verfahren nach einem der vorhergehenden Ansprüche, **dadurch gekennzeichnet, dass** im Rahmen der Kommunikation der zentralen Steuereinheit (CO) mit dem Energieübertragungsnetz (TN) Sollwerte (SW) für die vorzuhaltende Primärregelleistung (PRL) und Kurzschlussleistung (KSL) von dem Energieübertragungsnetz (TN) an die zentrale Steuereinheit (CO) übermittelt werden und/oder im Rahmen der Kommunikation der zentralen Steuereinheit (CO) mit den lokalen Steuereinheiten (LC) die von den steuerbaren Netzknoten (N1, ..., N9) jeweils angebotene Primärregelleistung (PRL) und Kurzschlussleistung (KSL) durch die lokalen Steuereinheiten (LC) der zentralen Steuereinheit (CO) mitgeteilt werden.

6. Verfahren nach einem der vorhergehenden Ansprüche, **dadurch gekennzeichnet, dass** in der zentralen Steuereinheit (CO) die aktuelle Netzbelastung des Energieverteilnetzes (DN) geschätzt und/oder die zukünftige Netzbelastung vorhergesagt wird, wobei die zentrale Steuereinheit (CO) bei der Steuerung des Energieverteilnetzes (DN) die aktuelle und/oder zukünftige Netzbelastung derart berücksichtigt, dass eine vorbestimmte Belastungsgrenze des Energieverteilnetzes (DN) nicht überschritten wird.

7. Verfahren nach Anspruch 6, **dadurch gekennzeichnet, dass** zur Schätzung der aktuellen Netzbelastung und/oder zur Vorhersage der zukünftigen Netzbelastung Istwerte (IW) und/oder Vorhersagen von Parametern der steuerbaren Netzknoten (N1, ..., N9) von den jeweiligen lokalen Steuereinheiten (LC) an die zentralen Steuereinheit (CO) übermittelt werden und basierend auf der aktuellen und/oder zukünftigen Netzbelastung Sollwerte der Parameter der steuerbaren Netzknoten (N1, ..., N9) von der zentralen Steuereinheit (CO) an die jeweiligen lokalen Steuereinheiten (LC) übermittelt werden.

8. Verfahren nach Anspruch 7, **dadurch gekennzeichnet, dass** zur Schätzung der aktuellen Netzbelastung und/oder zur Vorhersage der zukünftigen Netzbelastung ferner Istwerte (IW) von Spannungs- und/oder Stromsensoren (SE), die im Energieverteilnetz (DN) außerhalb der steuerbaren Netzknoten (N1, ..., N9) angeordnet sind, und/oder Wettervorhersagen an die zentrale Steuereinheit (CO) und/oder zumindest einen Teil der lokalen Steuereinheiten (LC) übermittelt werden.

9. Verfahren nach einem der vorhergehenden Ansprüche, **dadurch gekennzeichnet, dass** der Koppelpunkt (PCC) an einem Umspannwerk (UW) vorgesehen ist.

10. Verfahren nach einem der vorhergehenden Ansprüche, **dadurch gekennzeichnet, dass** die steuerbaren Netzknoten (N1, ..., N9) des Energieverteilnetzes (DN), welche Energieerzeuger sind, eine oder mehrere regenerative Energieerzeuger, insbesondere eine oder mehrere Windkraftanlagen (WP) und/oder eine oder mehrere Photovoltaikanlagen (PV) und/oder ein oder mehrere Wasserkraftwerke und/oder ein oder mehrere Biomassekraftwerke (BM), und/oder ein oder mehrere fossile Kraftwerke und/oder eine oder mehrere Kraft-Wärme-Kopplungs-Anlagen und/oder eine oder mehrere Kraft-Wärme-Kälte-Kopplungs-Anlagen (KWK) mit jeweiligen lokalen Steuereinheiten (LC) umfassen, welche im Rahmen der Steuerung des Energieverteilnetzes (DN) mit der zentralen Steuereinheit (CO) kommunizieren.

11. Verfahren nach einem der vorhergehenden Ansprüche, **dadurch gekennzeichnet, dass** die steuerbaren Netzknoten (N1, ..., N9) des Energieverteilnetzes (DN) einen oder mehrere steuerbare Energieverbraucher (LA) und/oder einen oder mehrere Energiespeicher (ST) und/oder ein oder mehrere Microgrids mit jeweiligen lokalen Steuereinheiten (LC) umfassen, welche im Rahmen der Steuerung des Energieverteilnetzes (DN) mit der zentralen Steuereinheit (CO) kommunizieren.

12. Verfahren nach einem der vorhergehenden Ansprüche, **dadurch gekennzeichnet, dass** die steuerbaren Netzknoten (N1, ..., N9) des Energieverteilnetzes (DN) ferner einen oder mehrere Spannungsregler (VC) mit jeweiligen lokalen Steuereinheiten (LC) umfassen, welche im Rahmen der Steuerung des Energieverteilnetzes (DN) mit der zentralen Steuereinheit (CO) kommunizieren, wobei der oder die Spannungsregler (VC) vorzugsweise einen oder mehrere Transformatoren (TR) und/oder eine oder mehrere Kapazitätsbänke (KB) und/oder einen oder mehrere Längsregler umfassen.

13. Elektrisches Energieverteilnetz, welches zur Bereitstellung von elektrischer Leistung eine Vielzahl von über Stromleitungen (L) verbundenen Netzknoten (N1, ..., N9, N') umfasst, wobei zumindest ein Teil der Netzknoten (N1, ..., N9, N') steuerbare Netzknoten (N1, ..., N9) mit jeweiligen lokalen Steuereinheiten (LC) sind und zumindest ein Teil dieser steuerbaren Netzknoten (N1, ..., N9) dezentrale elektrische Energieerzeuger oder dezentrale elektrische Energiespeicher sind, wobei das Energieverteilnetz (DN) an einem Koppelpunkt (PCC) an ein Energieübertragungsnetz (TN) gekoppelt ist und an diesem Koppelpunkt (PCC) dem Energieübertragungsnetz (TN) elektrische Leistung (P, Q) bereitstellen kann, die von den steuerbaren Netzknoten (N1, ..., N9) des Energieverteilnetzes (DN) stammt, wobei zur Bereitstellung der elektrischen Leistung (P, Q) eine zentrale Steuereinheit (CO) im Energieverteilnetz (DN) mit den lokalen Steuereinheiten (LC) der steuerbaren Netzknoten (N1, ..., N9) und dem Energieübertragungsnetz (TN) kommunizieren kann, **dadurch gekennzeichnet, dass** die zentrale Steuereinheit (CO) derart ausgestaltet ist, dass sie das Energieverteilnetz (DN), das ein topologisches Kraftwerk mit den Netzknoten (N1, ..., N9) in einem klar definierten Netzgebiet und mit dem Koppelpunkt (PCC) als eindeutigen Koppelpunkt zum überlagerten Energieübertragungsnetz (TN) darstellt, mit Hilfe der Kommunikation mit den lokalen Steuereinheiten (LC) und dem Energieübertragungsnetz (TN) derart steuert, dass an dem eindeutigen Koppelpunkt (PCC) Primärregelleistung (PRL) und Kurzschlussleistung (KSL) für das Energieübertragungsnetz (TN) vorgehalten wird.

14. Energieverteilnetz nach Anspruch 13, welches zur Durchführung eines Verfahrens nach einem der Ansprüche 2 bis 12 eingerichtet ist.

15. Steuereinheit für ein elektrisches Energieverteilnetz (DN) nach Anspruch 13 oder 14, **dadurch gekennzeichnet, dass** die Steuereinheit als zentrale Steuereinheit (CO) des Energieverteilnetzes (DN) ausgebildet ist, und welche ausgestaltet ist, mit den lokalen Steuereinheiten (LC) der steuerbaren Netzknoten (N1, ..., N9), die dezentrale elektrische Energieerzeuger oder dezentrale elektrische Energiespeicher sind, und mit dem Energieübertragungsnetz (TN) zu kommunizieren und mit Hilfe dieser Kommunikation das Energieverteilnetz (DN), das ein topologisches Kraftwerk mit den Netzknoten (N1, ..., N9) in einem klar definierten Netzgebiet und mit dem Koppelpunkt (PCC) als eindeutigen Koppelpunkt zum überlagerten Energieübertragungsnetz (TN) darstellt, derart anzusteuern, dass an dem eindeutigen Koppelpunkt (PCC) Primärregelleistung (PRL) und Kurzschlussleistung (KSL) für das Energieübertragungsnetz (TN) vorgehalten wird.

**Claims**

1. Method for controlling an electrical energy distribution network (DN) in which electrical power is provided via a multiplicity of network nodes (N1, ..., N9, N') connected via power lines (L), wherein at least a portion of the network nodes (N1, ..., N9, N') are controllable network nodes (N1, ..., N9) with respective local control units (LC), and at least a portion of these controllable network nodes (N1, ..., N9) are decentralized electrical energy generators or decentralized electrical energy stores, wherein the energy distribution network (DN) is coupled to an energy transmission network (TN) at a point of common coupling (PCC) and provides electrical power (P, Q) to the energy transmission network (TN) at said point of common coupling (PCC), said electrical power originating from the controllable network nodes (N1, ..., N9) of the energy distribution network (DN), wherein, for providing the electrical power (P, Q), a central control unit (CO) in the energy distribution network (DN) communicates with the local control units (LC) of the controllable network nodes (N1, ..., N9) and the energy transmission network (TN) , **character-**

ized in that the central control unit (CO) controls the energy distribution network (DN), which constitutes a topological power plant with the network nodes (N1, ..., N9) in a clearly defined network area and with the point of common coupling (PCC) as the unique point of common coupling to the higher-level energy transmission network (TN), with the aid of the communication with the local control units (LC) and the energy transmission network (TN) in such a way that at the unique point of common coupling (PCC) primary control power (PRL) and short-circuit power (KSL) are kept available for the energy transmission network (TN).

2. Method according to Claim 1, **characterized in that** the central control unit (CO) furthermore controls the energy distribution network (DN) in such a way that at the point of common coupling (PCC) secondary control power (SRL) and/or tertiary control power are/is kept available for the energy transmission network (TN) and/or that harmonics and/or subharmonics of the voltage at the point of common coupling (PCC) are compensated for.

3. Method according to Claim 1 or 2, **characterized in that** the central control unit (CO) furthermore controls the energy distribution network (DN) in such a way that at the point of common coupling (PCC) control reactive power (RBL) is kept available for the energy transmission network (TN), wherein the control reactive power (RBL) is provided for compensating for voltage fluctuations at the point of common coupling (PCC) .

4. Method according to any of the preceding claims, **characterized in that** the central control unit (CO) furthermore controls the energy distribution network (DN) in such a way that the energy distribution network (DN) is operated as an island network in the event of failure of the energy transmission network (TN).

5. Method according to any of the preceding claims, **characterized in that** in the context of the communication of the central control unit (CO) with the energy transmission network (TN) setpoint values (SW) for the primary control power (PRL) and short-circuit power (KSL) to be kept available are transmitted from the energy transmission network (TN) to the central control unit (CO) and/or in the context of the communication of the central control unit (CO) with the local control units (LC) the primary control power (PRL) and short-circuit power (KSL) respectively offered by the controllable network nodes (N1, ..., N9) are communicated to the central control unit (CO) by the local control units (LC).

6. Method according to any of the preceding claims, **characterized in that** in the central control unit (CO) the present network loading of the energy distribution network (DN) is estimated and/or the future network loading is predicted, wherein the central control unit (CO) takes account of the present and/or future network loading in the control of the energy distribution network (DN) in such a way that a predetermined loading limit of the energy distribution network (DN) is not exceeded.

7. Method according to Claim 6, **characterized in that** for estimating the present network loading and/or for predicting the future network loading actual values (IW) and/or predictions of parameters of the controllable network nodes (N1, ..., N9) are transmitted from the respective local control units (LC) to the central control unit (CO) and, on the basis of the present and/or future network loading, setpoint values of the parameters of the controllable network nodes (N1, ..., N9) are transmitted from the central control unit (CO) to the respective local control units (LC).

8. Method according to Claim 7, **characterized in that** for estimating the present network loading and/or for predicting the future network loading actual values (IW) from voltage and/or current sensors (SE) arranged in the energy distribution network (DN) outside the controllable network nodes (N1, ..., N9) and/or weather forecasts are furthermore transmitted to the central control unit (CO) and/or at least a portion of the local control units (LC).

9. Method according to any of the preceding claims, **characterized in that** the point of common coupling (PCC) is provided at a transformer substation (UW).

10. Method according to any of the preceding claims, **characterized in that** the controllable network nodes (N1, ..., N9) of the energy distribution network (DN) which are energy generators comprise one or a plurality of regenerative energy generators, in particular one or a plurality of wind power installations (WP) and/or one or a plurality of photovoltaic installations (PV) and/or one or a plurality of hydroelectric power plants and/or one or a plurality of biomass power plants (BM), and/or one or a plurality of fossil-fuel power plants and/or one or a plurality of combined heat and power plants and/or one or a plurality of combined cooling, heat and power plants (KWK) with respective local control units (LC) which communicate with the central control unit (CO) in the context of the control of the energy distribution network (DN).

11. Method according to any of the preceding claims, **characterized in that** the controllable network nodes (N1, ..., N9) of the energy distribution network (DN) comprise one or a plurality of controllable energy loads (LA) and/or one or a plurality of energy stores (ST) and/or one or a plurality of microgrids with respective local control units (LC) which communicate with the central control unit (CO) in the context of the control of the energy distribution network (DN).

12. Method according to any of the preceding claims, **characterized in that** the controllable network nodes (N1, ..., N9) of the energy distribution network (DN) furthermore comprise one or a plurality of voltage controllers (VC) with respective local control units (LC) which communicate with the central control unit (CO) in the context of the control of the energy distribution network (DN), wherein the voltage controller or voltage controllers (VC) preferably comprise(s) one or a plurality of transformers (TR) and/or one or a plurality of capacitance banks (KB) and/or one or a plurality of series controllers.

13. Electrical energy distribution network which, for providing electrical power, comprises a multiplicity of network nodes (N1, ..., N9, N') connected via power lines (L), wherein at least a portion of the network nodes (N1, ..., N9, N') are controllable network nodes (N1, ..., N9) with respective local control units (LC), and at least a portion of these controllable network nodes (N1, ..., N9) are decentralized electrical energy generators or decentralized electrical energy stores, wherein the energy distribution network (DN) is coupled to an energy transmission network (TN) at a point of common coupling (PCC) and can provide electrical power (P, Q) to the energy transmission network (TN) at said point of common coupling (PCC), said electrical power originating from the controllable network nodes (N1, ..., N9) of the energy distribution network (DN), wherein, for providing the electrical power (P, Q), a central control unit (CO) in the energy distribution network (DN) can communicate with the local control units (LC) of the controllable network nodes (N1, ..., N9) and the energy transmission network (TN), **characterized in that** the central control unit (CO) is configured in such a way that it controls the energy distribution network (DN), which constitutes a topological power plant with the network nodes (N1, ..., N9) in a clearly defined network area and with the point of common coupling (PCC) as the unique point of common coupling to the higher-level energy transmission network (TN), with the aid of the communication with the local control units (LC) and the energy transmission network (TN) in such a way that at the unique point of common coupling (PCC) primary control power (PRL) and short-circuit power (KSL) are kept available for the energy transmission network (TN).

14. Energy distribution network according to Claim 13, which is designed for carrying out a method according to any of Claims 2 to 12.

15. Control unit for an electrical energy distribution network (DN) according to Claim 13 or 14, **characterized in that** the control unit is designed as the central control unit (CO) of the energy distribution network (DN), and is configured to communicate with the local control units (LC) of the controllable network nodes (N1, ..., N9), which are decentralized electrical energy generators or decentralized electrical energy stores, and with the energy transmission network (TN) and, with the aid of this communication, to control the energy distribution network (DN), which constitutes a topological power plant with the network nodes (N1, ..., N9) in a clearly defined network area and with the point of common coupling (PCC) as the unique point of common coupling to the higher-level energy transmission network (TN), in such a way that at the unique point of common coupling (PCC) primary control power (PRL) and short-circuit power (KSL) are kept available for the energy transmission network (TN) .

**Revendications**

1. Procédé de contrôle d'un réseau de distribution d'énergie électrique (DN) dans lequel une puissance électrique est mise à disposition par l'intermédiaire d'une pluralité de nœuds de réseau (N1, ..., N9, N') reliés par des lignes électriques (L), dans lequel au moins une partie des nœuds de réseau (N1, ..., N9, N') sont des nœuds de réseau contrôlables (N1, ..., N9) avec des unités de commande locales (LC) respectives et au moins une partie de ces nœuds de réseau contrôlables (N1, ..., N9) sont des générateurs d'énergie électrique décentralisés ou des accumulateurs d'énergie décentralisés, dans lequel le réseau de distribution d'énergie (DN) est couplé, au niveau d'un point de couplage (PCC), à un réseau de transmission d'énergie (TN) et, au niveau de ce point de couplage (PCC), met à la disposition du réseau de transmission d'énergie (TN) une puissance électrique (P, Q) qui provient des nœuds de réseau contrôlables (N1, ..., N9) du réseau de distribution d'énergie (DN), dans lequel, pour la mise à disposition de la puissance électrique (P, Q), une unité de commande centrale (CO) du réseau de distribution d'énergie (DN) communique avec les unités de commande locales (LC) des nœuds de réseau contrôlables (N1, ..., N9) et le réseau de transmission d'énergie (TN), **caractérisé en ce que** l'unité de commande centrale (CO) contrôle le réseau de distribution d'énergie (DN), qui constitue une centrale énergétique topologique avec les nœuds de réseau (N1, ..., N9) dans une zone de réseau clairement définie et avec le point de couplage (PCC) en tant que point de couplage univoque avec le réseau de transmission d'énergie (TN) superposé, à l'aide de la communication avec les unités de commande locales (LC) et le réseau de transmission d'énergie (TN) de façon à ce que, au niveau du point de couplage (PCC) univoque, une puissance de régulation primaire (PRL) et une puissance de court-circuit (KSL) soient retenues pour le réseau de transmission d'énergie (TN).

2. Procédé selon la revendication 1, **caractérisé en ce que** l'unité de commande centrale (CO) contrôle en outre le réseau de distribution d'énergie (DN) de façon à ce que, au niveau du point de couplage (PCC), une puissance de régulation secondaire (SRL) et/ou une puissance de régulation tertiaire soient retenues pour le réseau de transmission d'énergie (TN) et/ou **en ce que** des harmoniques et/ou des sous-harmoniques de la tension sont compensées au niveau du point de couplage (PCC).

3. Procédé selon la revendication 1 ou 2, **caractérisé en ce que** l'unité de commande centrale (CO) contrôle en outre le réseau de distribution d'énergie (DN) de façon à ce que, au niveau du point de couplage (PCC), une puissance réactive de régulation (RBL) soit retenue pour le réseau de transmission d'énergie (TN), dans lequel la puissance apparente de régulation (RBL) est prévue pour la compensation des variations de tension au niveau du point de couplage (PCC).

4. Procédé selon l'une des revendications précédentes, **caractérisé en ce que** l'unité de commande centrale (CO) contrôle en outre le réseau de distribution d'énergie (DN) de façon à ce que le réseau de distribution d'énergie (DN) fonctionne comme un réseau séparé en cas de panne du réseau de transmission d'énergie (TN) .

5. Procédé selon l'une des revendications précédentes, **caractérisé en ce que**, dans le cadre de la communication de l'unité de commande centrale (CO) avec le réseau de transmission d'énergie (TN), des valeurs de consigne (SW) pour la puissance de régulation primaire (PRL) et la puissance de court-circuit (KSL) à retenir sont transmises par le réseau de transmission d'énergie (TN) à l'unité de commande centrale (CO) et/ou, dans le cadre de la communication de l'unité de commande centrale (CO) avec les unités de commande locales (LC), la puissance de régulation primaire (PRL) et la puissance de court-circuit (KSL) proposées respectivement par les nœuds de réseau contrôlables (N1, ..., N9) sont notifiées par les unités de commande locales (LC) à l'unité de commande centrale (CO).

6. Procédé selon l'une des revendications précédentes, **caractérisé en ce que**, dans l'unité de commande centrale (CO), la charge actuelle du réseau de distribution d'énergie (DN) est évaluée et/ou la charge future du réseau est prédite, dans lequel l'unité de commande centrale (CO) prend en compte la charge de réseau actuelle et/ou future lorsqu'elle contrôle le réseau de distribution d'électricité (DN) de façon à ce qu'une limite de charge prédéterminée du réseau de distribution d'énergie (DN) ne soit pas dépassée.

7. Procédé selon la revendication 6, **caractérisé en ce que**, pour l'évaluation de la charge de réseau actuelle et/ou pour la prédiction de la charge de réseau future, des valeurs réelles (IW) et/ou des prédictions de paramètres des nœuds de réseau contrôlables (N1, ..., N9) sont transmises par les unités de commande locales (LC) respectives à l'unité de commande centrale (CO) et, sur la base de la charge de réseau actuelle et/ou future, des valeurs de consigne des paramètres des nœuds de réseau contrôlables (N1, ..., N9) sont transmises par l'unité de commande centrale (CO) aux unités de commande locales (LC) respectives.

8. Procédé selon la revendication 7, **caractérisé en ce que**, pour l'évaluation de la charge de réseau actuelle et/ou pour la prédiction de la charge de réseau future, des valeurs réelles (IW) de capteurs de tension et/ou de courant (SE), qui sont disposés dans le réseau de distribution d'énergie (DN) à l'extérieur des nœuds de réseau contrôlables (N1, ..., N9), et/ou des prévisions météorologiques sont en outre transmises à l'unité de commande centrale (CO) et/ou à au moins une partie des unités de commande locales (LC).

9. Procédé selon l'une des revendications précédentes, **caractérisé en ce que** le point de couplage (PCC) est prévu au niveau d'un poste de transformation (UW).

10. Procédé selon l'une des revendications précédentes, **caractérisé en ce que** les nœuds de réseau contrôlables (N1, ..., N9) du réseau de distribution d'énergie (DN), qui sont des générateurs d'énergie, comprennent un ou plusieurs générateurs d'énergie régénératifs, plus particulièrement une ou plusieurs éoliennes (WP) et/ou une ou plusieurs installations photovoltaïques (PV) et/ou une ou plusieurs centrales hydrauliques et/ou une ou plusieurs centrales à biomasse (BM) et/ou une ou plusieurs centrales à énergie fossile et/ou une ou plusieurs installations de cogénération et/ou une ou plusieurs installations de trigénération (KWK), avec des unités de commande locales (LC) respectives, qui communiquent, dans le cadre du contrôle du réseau de distribution d'énergie (DN), avec l'unité de commande centrale (CO).

11. Procédé selon l'une des revendications précédentes, **caractérisé en ce que** les nœuds de réseau contrôlables (N1, ..., N9) du réseau de distribution d'énergie (DN) comprennent un ou plusieurs consommateurs d'énergie contrôlables (LA) et/ou un ou plusieurs accumulateurs d'énergie (ST) et/ou un ou plusieurs micro-réseaux avec des unités de commande locales (LC) respectives, qui communiquent, dans le cadre du contrôle du réseau de distribution d'énergie (DN), avec l'unité de commande centrale (CO).

12. Procédé selon l'une des revendications précédentes, **caractérisé en ce que** les nœuds de réseau contrôlables (N1, ..., N9) du réseau de distribution d'énergie (DN) comprennent en outre un ou plusieurs régulateurs de tension (VC) avec des unités de commande locales (LC) respectives, qui communiquent, dans le cadre du contrôle du réseau de distribution d'énergie (DN), avec l'unité de commande centrale (CO), dans lequel le ou les régulateurs de tension (VC) comprennent de préférence un ou plusieurs transformateurs (TR) et/ou un ou plusieurs bancs de condensateurs (KB) et/ou un ou plusieurs régulateurs en série.

13. Réseau de distribution d'énergie électrique qui comprend, pour la mise à disposition d'une puissance électrique, une pluralité de nœuds de réseau (N1, ..., N9, N') reliés par des lignes électriques (L), dans lequel au moins une partie des nœuds de réseau (N1, ..., N9, N') sont des nœuds de réseau contrôlables (N1, ..., N9) avec des unités de commande locales (LC) respectives et au moins une partie de ces nœuds de réseau contrôlables (N1, ..., N9) sont des générateurs d'énergie électrique décentralisés ou des accumulateurs d'énergie décentralisés, dans lequel le réseau de distribution d'énergie (DN) est couplé, au niveau d'un point de couplage (PCC), à un réseau de transmission d'énergie (TN) et, au niveau de ce point de couplage (PCC), peut mettre à la disposition du réseau de transmission d'énergie (TN) une puissance électrique (P, Q) qui provient des nœuds de réseau contrôlables (N1, ..., N9) du réseau de distribution d'énergie (DN), dans lequel, pour la mise à disposition de la puissance électrique (P, Q), une unité de commande centrale (CO) du réseau de distribution d'énergie (DN) communique avec les unités de commande locales (LC) des nœuds de réseau contrôlables (N1, ..., N9) et le réseau de transmission d'énergie (TN), **caractérisé en ce que** l'unité de commande centrale (CO) est conçue de façon à contrôler le réseau de distribution d'énergie (DN), qui constitue une centrale énergétique topologique avec les nœuds de réseau (N1, ..., N9) dans une zone de réseau clairement définie et avec le point de couplage (PCC) en tant que point de couplage univoque avec le réseau de transmission d'énergie (TN) superposé, à l'aide de la communication avec les unités de commande locales (LC) et le réseau de transmission d'énergie (TN) de façon à ce que, au niveau du point de couplage (PCC) univoque, une puissance de régulation primaire (PRL) et une puissance de court-circuit (KSL) soient retenues pour le réseau de transmission d'énergie (TN).

14. Réseau de distribution d'énergie électrique selon la revendication 13, qui est conçu pour l'exécution d'un procédé selon l'une des revendications 2 à 12.

15. Unité de commande pour un réseau de distribution d'énergie (DN) selon la revendication 13 ou 14, **caractérisé en ce que** l'unité de commande est conçue comme une unité de commande centrale (CO) du réseau de distribution d'énergie (DN) et qui est conçue pour communiquer avec les unités de commande locales (LC) des nœuds de réseau contrôlables (N1, ..., N9), qui sont des générateurs d'énergie électrique décentralisés ou des accumulateurs d'énergie électrique décentralisés, et avec le réseau de transmission d'énergie (TN) et, à l'aide de cette communication, pour contrôler le réseau de distribution d'énergie (DN), qui constitue une centrale énergétique topologique avec les nœuds de réseau (N1, ..., N9) dans une zone de réseau clairement définie et avec le point de couplage (PCC) en tant que point de couplage univoque avec le réseau de transmission d'énergie (TN) superposé, de façon à ce que, au niveau du point de couplage (PCC) univoque, une puissance de régulation primaire (PRL) et une puissance de court-circuit (KSL) soient retenues pour le réseau de transmission d'énergie (TN).

FIG 1

N6, PV
N8, LA
N7, ST
N5, KWK
N4, KWK
N'
N3, BM
N2, WP
N1, PV
N9, TR
N''
DN
LC
UW
PCC, P, Q
CO
TN
UW'
KW

# FIG 2

SW: P(t); Q(t),
PRL, SRL, RBL, KSL

AN: P(t), Q(t),
PRL, SRL, RBL, KSL

CON

CO

SW'

NI

IW

EST

RP

NVR

RW

RW

N1, N2, ..., N9

SE

VC: TR, KB

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013189552 A1

**In der Beschreibung aufgeführte Nicht-Patentliteratur**

- **E. FUCHS et al.** Into the New Electricity Age with Optimal Integration of Decentralized Energy Resources - The Fenix Project. *WEC Montreal,* 12. September 2010